# EUROPEAN PATENT SPECIFICATION

(11) **EP 3 984 777 B1**
(45) Date of publication and mention of the grant of the patent: **01.01.2025**
(21) Application number: 20822555.7
(22) Date of filing: 11.06.2020
(51) Int. Cl.: B60C 11/12, B60C 11/13, B60C 11/24, B60C 11/03

(54) **PNEUMATIC TIRE**
LUFTREIFEN
PNEUMATIQUE

(30) Priority: 14.06.2019 JP 2019111354
(43) Date of publication of application: 20.04.2022
(73) Proprietor: BRIDGESTONE CORPORATION, Chuo-ku Tokyo 104-8340 (JP)
(72) Inventor: HASEGAWA, Kohei, Tokyo 104-8340 (JP)
(74) Representative: Marks & Clerk LLP
(86) International application number: PCT/JP2020/023088
(87) International publication number: WO 2020/250993

(56) References cited:
- EP-A1- 2 492 117
- EP-A1- 3 368 341
- WO-A1-2017/103457
- WO-A1-2017/103460
- WO-A1-2018/230363
- JP-A- 2003 159 910
- JP-A- 2014 097 697
- JP-A- 2014 522 772
- JP-A- 2014 523 366
- JP-A- 2016 501 769
- JP-A- 2017 193 222
- JP-A- H05 254 314
- JP-A- H11 151 913

## Description

### [Technical Field]

The present invention relates to a pneumatic tire for use as a wheel of a vehicle.

### [Background Art]

As for a tire having a tire tread in which a plurality of circumferential grooves extending in a tire circumferential direction are formed taking a draining property into consideration, land portions partitioned by the circumferential grooves are formed on the tire, and widthwise fine grooves having a small groove width and extending in a tire widthwise direction are formed in the land portions, to secure a draining property and edge components while reduction of the rigidity of the land portions is suppressed, thereby improving the friction force with the road surface (wet grip performance). Such an example as described above is available (for example, refer to Patent Document 1). Attention is also drawn to the disclosure of EP3368341A1.

### [Prior Art Document]

### [Patent Document]

Patent Document 1: JP 2015-24792 A

On the tire disclosed in Patent Document 1, a center land portion in a center region in the middle in the tire widthwise direction, shoulder land portions in shoulder regions at opposite ends in the tire widthwise direction, and second land portions between the center land portion and the shoulder land portions are formed by being partitioned by four circumferential grooves extending in a circumferential direction on the tire tread.

In all of the land portions, widthwise fine grooves (sipes) extending in the tire widthwise direction are formed.

The widthwise fine grooves (sipes) having a small groove width can suppress reduction of the rigidity of the land portions by closing when the tire touches the ground while a draining property and edge components are secured.

### [Summary of the Invention]

### [Underlying Problem to be solved by the Invention]

Regarding a pneumatic tire that rotates while supporting a vehicle, in a case of a pneumatic tire mounted on a driving wheel that is rotated by power transmitted thereto, a high contact pressure between the ground and the tire tread and friction force by rotation are applied to the center region, and the center region is thus worn faster than the shoulder regions.

On the other hand, in a case of a pneumatic tire mounted on a steering wheel that is steered, high friction force by steering of the tire tread is applied to the shoulder regions, and the shoulder regions are thus worn faster than the center region.

As described above, in the pneumatic tire, a difference in wear rate arises between the center region and the shoulder regions through travel of a vehicle, and the wear becomes unbalanced, that is, uneven wear occurs.

Specifically, although uneven wear is less evident before the middle stage of wear, uneven wear usually becomes evident after the middle stage of wear, resulting in deterioration in merchantability and undesirable quality.

In the tire disclosed in Patent Document 1, specifically in a case where the tire is mounted on a steering wheel, the progress of wear is faster in the shoulder regions of the tire tread than the progress of wear in the center region.

Although, even with this, the uneven wear is not evident before the middle stage of wear, the wear of the shoulder land portions progresses more and more from the middle stage of wear, and uneven wear becomes evident.

Further, although, in Patent Document 1, widthwise fine grooves (sipes) are formed in the land portions to secure the draining property while degradation of the rigidity is suppressed, it is difficult to maintain the draining property until the last stage of wear.

The present invention has been made in view of such points as described above, and an object of the present invention resides in provision of a pneumatic tire that can suppress uneven wear from the middle stage of wear while constantly maintaining a desirable wet grip performance.

### [Means to solve the Problem]

In order to achieve the object described above, the present invention provides a pneumatic tire that has a plurality of land portions formed on a tread of the tire by being partitioned by a plurality of circumferential grooves extending in a tire circumferential direction, the plurality of land portions extending in the tire circumferential direction, and that has a plurality of widthwise fine grooves formed in the land portions so as to extend in a tire widthwise direction, in which
the widthwise fine grooves have widened groove portions provided at a groove bottom thereof with an increased groove width, and
in a case where, among adjacent ones of the land portions on one side in the tire widthwise direction with respect to a tire equator line placed in the middle in the tire widthwise direction, one of the adjacent land portions on the side of the tire equator line is assumed to be an inner side land portion and another land portion on the outer side in the tire widthwise direction with respect to the inner side land portion is assumed to be an outer side land portion,
when, in a state in which the tire is worn to a depth of 50% of a depth from a treading face of a tread of an unused tire to an end face of a tread wear indicator, an inner side land portion cross sectional area ratio and an outer side land portion cross sectional area ratio are compared with each other,
   the inner side land portion cross sectional area ratio being a ratio of an annular cross sectional area that does not include the area of the widthwise fine grooves in a tread annular cross section obtained when the inner side land portion is cut along a plane perpendicular to the tire widthwise direction, to an annular cross sectional area that includes the area of the widthwise fine grooves,
   the outer side land portion cross sectional area ratio being a ratio of an annular cross sectional area that does not include the area of the widthwise fine grooves in a tread annular cross section obtained when the outer side land portion is cut along the plane perpendicular to the tire widthwise direction, to an annular cross sectional area that includes the area of the widthwise fine grooves,
the outer side land portion cross sectional area ratio is higher than the inner side land portion cross sectional area ratio.

According to this configuration, in the state in which the tire is worn to a depth of 50% of the depth from the treading face of the tread of the unused tire to the end face of the tread wear indicator, the outer side land portion cross sectional area ratio is higher than the inner side land portion cross sectional area ratio. Therefore, the outer side land portion is higher in rigidity than the inner side land portion, and in a case where the pneumatic tire is mounted on a steering wheel that is steered, the progress of wear of the outer side land portion is suppressed from the middle stage of wear compared with the progress of wear of the inner side land portion, and uneven wear can be suppressed. Consequently, the merchantability and the quality can be maintained.

Further, although the widthwise fine groove of a small groove width that is formed in the land portion has a groove portion on the treading face side of the tread that is closed by compression deformation of the land portions when the tire touches the ground, since the widthwise fine groove has the widened groove portion having an increased groove width at the groove bottom thereof, the widened groove portion is also maintained from the middle stage of wear. Consequently, the draining property is secured by the widened groove portion, and a desirable wet grip performance can be maintained together with edge components.

In a preferred embodiment of the present invention,
the widened groove portions of the widthwise fine grooves in the outer side land portion have a smaller groove width than a groove width of the widened groove portions of the widthwise fine grooves in the inner side land portion.

According to this configuration, since the widened groove portion of the widthwise fine groove in the outer side land portion is smaller in groove width than the widened groove portion of the widthwise fine groove in the inner side land portion, in the state in which the tire is worn to a depth of 50% of the depth from the treading face of the tread of the unused tire to the end face of the tread wear indicator, the outer side land portion cross sectional area ratio can be made higher than the inner side land portion cross sectional area ratio easily. Therefore, the outer side land portion is higher in rigidity than the inner side land portion, and in a case where the pneumatic tire is mounted on a steering wheel that is steered, the progress of wear of the outer side land portion is suppressed from the middle stage of wear compared with the progress of wear of the inner side land portion, and uneven wear can be suppressed.

In a preferred embodiment of the present invention,
the number of the widthwise fine grooves in the outer side land portion is smaller than the number of the widthwise fine grooves in the inner side land portion.

According to this configuration, since the number of the widthwise fine grooves in the outer side land portion is smaller than the number of the widthwise fine grooves in the inner side land portion, in the state in which the tire is worn to a depth of 50% of the depth from the treading face of the tread of the unused tire to the end face of the tread wear indicator, the outer side land portion cross sectional area ratio can be made higher than the inner side land portion cross sectional area ratio easily. Therefore, the outer side land portion is higher in rigidity than the inner side land portion, and in a case where the pneumatic tire is mounted on a steering wheel that is steered, the progress of wear of the outer side land portion is suppressed from the middle stage of wear compared with the progress of wear of the inner side land portion, and uneven wear can be suppressed.

In a preferred embodiment of the present invention,
the widthwise fine grooves in the inner side land portion in the middle in the tire widthwise direction among the land portions are each shaped so as to have a groove width that gradually increases from the treading face of the tread of the unused tire to corresponding one of the widened groove portions of a maximum width.

According to this structure, since the widthwise fine groove in the inner side land portion in the middle in the tire widthwise direction among the land portions is shaped so as to have the groove width that gradually increases from the treading face of the tread of the unused tire to the widened groove portion of the maximum width, in a case where the pneumatic tire is mounted on a steering wheel, the wear rate of the inner side land portion in the middle in the tire widthwise direction gradually becomes higher from the middle stage of wear in which uneven wear becomes evident, and the difference in wear rate between the inner side land portion and the outer side land portion having a higher wear rate is thus reduced. By this, uneven wear can further be suppressed and can be made less evident from the middle stage of wear.

In a preferred embodiment of the present invention,
the pneumatic tire is mounted on a steering wheel of a vehicle.

Since the pneumatic tire is mounted on a steering wheel of a vehicle, the progress of wear of the outer side land portion is suppressed from the middle stage of wear compared with the progress of wear of the inner side land portion. Thus, uneven wear can be suppressed, and the merchantability and the quality can be maintained.

### [Effects of the Invention]

According to the present invention, in the state in which the tire is worn to a depth of 50% of the depth from the treading face of the tread of the unused tire to the end face of the tread wear indicator, the outer side land portion cross sectional area ratio is higher than the inner side land portion cross sectional area ratio. Therefore, the outer side land portion is higher in rigidity than the inner side land portion, and in a case where the pneumatic tire is mounted on a steering wheel that is steered, from the middle stage of wear, the progress of wear of the outer side land portion is suppressed compared with that of the inner side land portion, and uneven wear can be suppressed. Consequently, the merchantability and the quality can be maintained.

Since the widthwise fine groove formed in the land portions has the widened groove portion having an increased groove width at the groove bottom thereof, even from the middle stage of wear, the draining property is secured by the widened groove portion until the last stage of wear. Consequently, a desirable wet grip performance can be maintained together with edge components.

### [Brief Description of Drawings]

FIG. 1 is a schematic cross sectional view depicting a left half of a pneumatic tire according to an embodiment of the present invention.
FIG. 2 is a partial plan view of a tread of the pneumatic tire.
FIG. 3 is a partial cross sectional view depicting a tire circumferential cross section obtained when an inner side land portion in the middle stage of wear of the tread is taken along a plane perpendicular to a tire widthwise direction (cross section taken along line III-III of FIG. 2).
FIG. 4 is a partial cross sectional view depicting a tire circumferential cross section of an outer side land portion in the middle stage of wear of the tread (cross section taken along line IV-IV of FIG. 2).
FIG. 5 is a partial plan view of a tread of a pneumatic tire according to another embodiment.
FIG. 6 is a partial cross sectional view depicting a tire circumferential cross section of an inner side land portion in the middle stage of wear of the tread (cross section taken along line VI-VI of FIG. 5).
FIG. 7 is a partial cross sectional view depicting a tire circumferential cross section of an outer side land portion in the middle stage of wear of the tread (cross section taken along line VII-VII of FIG. 5).
FIG. 8 is a partial cross sectional view depicting a tire circumferential cross section of an inner side land portion in the middle stage of wear of a tread of a pneumatic tire according to yet another embodiment.
FIG. 9 is a partial cross sectional view depicting a tire circumferential cross section of an outer side land portion in the middle stage of wear of the tread.
FIG. 10 is a partial plan view of a tread of a pneumatic tire according to another embodiment.

### [Modes for carrying out the Invention]

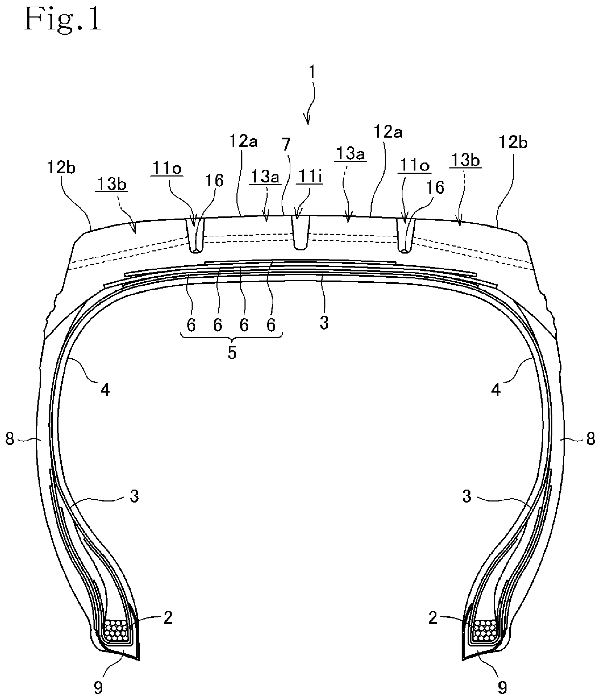

In the following, an embodiment according to the present invention is described with reference to FIGS. 1 to 4.

FIG. 1 is a tire widthwise cross sectional view of a pneumatic tire 1 according to the present embodiment (cross sectional view when the pneumatic tire 1 is taken along a plane including the tire rotation center axis). The pneumatic tire 1 is a radial tire for heavy load that is used for a truck or a bus.

The pneumatic tire 1 includes a pair of left and right bead rings 2 having metal wires wound in a ring shape and a toroidal carcass ply 3 formed with the opposite edges thereof wound around the respective bead rings 2 while a portion thereof between the opposite edges swells to the outer side in a tire diameter direction.

An air permeable inner liner portion 4 is formed on the inner surface of the carcass ply 3.

A plurality of belt plies 6 are placed on one another and wound on an outer periphery of a crown portion of the carcass ply 3 to form a belt layer 5, and a tread 7 is formed on the outer side of the belt layer 5 in the tire diameter direction in such a manner as to cover the belt layer 5.

The belt layer 5 has the belt plies 6 placed on one another in a plurality of layers, and each belt ply 6 has belt cords covered with belt rubber and is formed in a belt shape.

A side wall portion 8 is formed on the outer surface of the opposite side portions of the carcass ply 3.

A bead portion 9 covers an annular end portion of the carcass ply 3 wound and folded back on each bead ring 2 and is continuous on the inner side thereof to the inner liner portion 4 and continuous on the outer side thereof to the side wall portion 8.

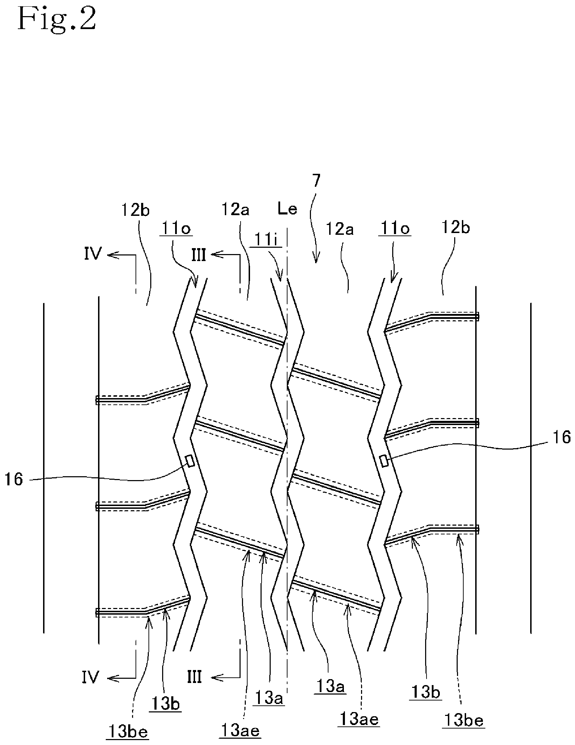

Referring to FIG. 1 and FIG. 2 that is a partial plan view of the tread 7, the tread 7 includes a middle circumferential groove 11i formed on a tire equator line Le in the middle in the tire widthwise direction so as to extend in a tire circumferential direction, and outer side circumferential grooves 11o formed on the opposite sides of the middle circumferential groove 11i in the tire widthwise direction so as to individually extend in the tire circumferential direction.

The middle circumferential groove 11i and the outer side circumferential grooves 11o extend in the tire circumferential direction in such a zigzag pattern as to swing in the tire widthwise direction.

Four land portions 12b, 12a, 12a, and 12b are formed by being partitioned by the three circumferential grooves 11o, 11i, and 11o and extend in the tire circumferential direction.

The inner side land portions 12a are formed by being partitioned by the middle circumferential groove 11i and the outer side circumferential grooves 11o, and the outer side land portions 12b are formed in the shoulder regions on the outer sides in the tire widthwise direction by being partitioned by the outer side circumferential grooves 11o.

The inner side land portion 12a has, on the both inner and outer sides thereof in the tire widthwise direction, side walls that vary in zigzag patterns.

The outer side land portion 12b in the shoulder region has, on the inner side thereof in the tire widthwise direction, a side wall that varies in a zigzag pattern.

In the land portions 12b, 12a, 12a, and 12b, a plurality of widthwise fine grooves 13b, 13a, 13a, and 13b having a small groove width are formed in the tire circumferential direction so as to individually extend in the tire widthwise direction.

The opposite ends of the inner side widthwise fine groove 13a in the inner side land portion 12a extend to and communicate with the middle circumferential groove 11i and the outer side circumferential groove 11o.

The outer side widthwise fine groove 13b in the outer side land portion 12b has one end communicating with the outer side circumferential groove 11o and the other end extending to an outer side face of the outer side land portion 12b in the shoulder region.

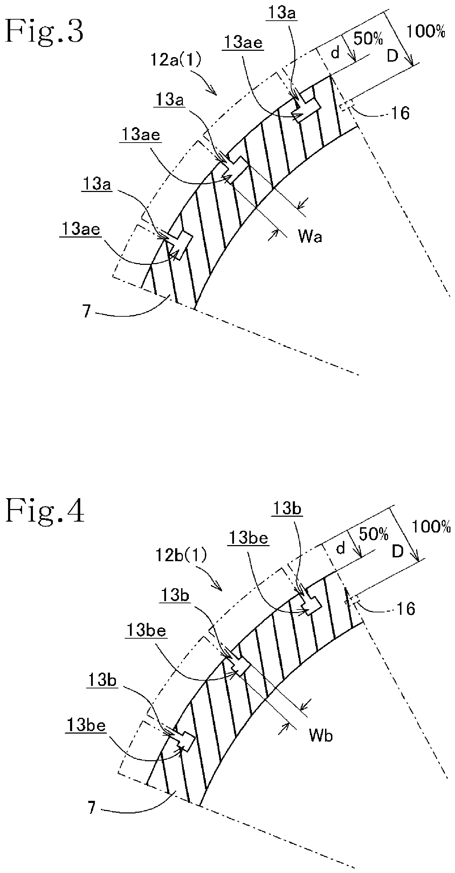

Referring to FIGS. 3 and 4, the widthwise fine grooves 13b, 13a, 13a, and 13b respectively have widened groove portions 13be, 13ae, 13ae, and 13be having an increased groove width at the groove bottom thereof.

The widened groove portions 13be, 13ae, 13ae, and 13be have a rectangular cross section.

The widened groove portion 13ae of the inner side widthwise fine groove 13a has a smaller width than that of the widened groove portion 13be of the outer side widthwise fine groove 13b.

Tread wear indicators 16 that are protrusions slightly projecting from the groove bottom by a predetermined amount are formed at several locations in the tire circumferential direction in the outer side circumferential grooves 11o of the present tread 7.

When the wear of the tread 7 progresses as a result of traveling and a treading face of the tread becomes in flush with a projecting end face of the tread wear indicators 16, it is determined that the level of wear reaches 100% and that the wear is in the last stage.

Referring to FIGS. 3 and 4, the degree of the progress of wear is indicated by a ratio (d/D) of a depth d of wear to a depth D. The depth d of wear is a depth from a treading face of a tread of an unused tire to a treading face of the tread that has been worn. The depth D is a depth from the treading face of the tread of the unused tire to the projecting end face of the tread wear indicators 16.

In other words, when the depth d of wear reaches the depth D, the level of wear reaches 100%.

Accordingly, when the depth d of wear in the middle stage of wear reaches the half depth D/2 of the depth D, the level of wear reaches 50%.

FIG. 3 depicts part of a tread annular cross section that is obtained when the inner side land portion 12a is cut along a plane perpendicular to the tire widthwise direction in a state in which the level of wear is 50%, that is, in a state in which the tire is worn to a depth of 50% of the depth D from the treading face of the tread of the unused tire to the end face of the tread wear indicator 16.

Further, FIG. 4 depicts part of a tread annular cross section that is obtained when the outer side land portion 12b is cut along the plane perpendicular to the tire widthwise direction in the state in which the level of wear is 50%.

In FIGS. 3 and 4, the tread annular cross section in the state in which the level of wear is 50% is indicated in a range of a center angle of approximately 40 degrees by solid lines, and the tread annular cross section of the unused tire is indicated by a dashed line.

In the tread annular cross section of the inner side land portion 12a depicted in FIG. 3, three widthwise fine grooves 13a are formed in an equally spaced relation with each other in the circumferential direction in a range of a center angle of 40 degrees.

Each of the widthwise fine grooves 13a includes the widened groove portion 13ae having a rectangular cross section and having an increased groove width at the groove bottom thereof.

In the tread annular cross section of the outer side land portion 12b depicted in FIG. 4, three widthwise fine grooves 13b are formed in an equally spaced relation with each other in the circumferential direction in a range of a center angle of 40 degrees.

Each of the widthwise fine grooves 13b includes the widened groove portion 13be having a rectangular cross section and having an increased groove width at the groove bottom thereof.

In a case where the widened groove portion 13ae of the widthwise fine groove 13a in the inner side land portion 12a depicted in FIG. 3 and the widened groove portion 13be of the widthwise fine groove 13b in the outer side land portion 12b depicted in FIG. 4 are compared with each other, both of them have cross sectional shapes of an equal groove depth, but a groove width Wb of the widened groove portion 13be in the outer side land portion 12b is smaller than a groove width Wa of the widened groove portion 13ae in the inner side land portion 12a.

The widthwise fine groove 13a in the inner side land portion 12a and the widthwise fine groove 13b in the outer side land portion 12b have the same shape except the widened groove portions 13ae and 13be.

Accordingly, in the state in which the level of wear is 50% in the tread 7, a sectional area of the widthwise fine groove 13b in the outer side land portion 12b is smaller than a sectional area of the widthwise fine groove 13a in the inner side land portion 12a.

Referring to FIG. 3, in the state in which the level of wear is 50% in the tread 7, the ratio of an annular cross sectional area (annular cross sectional area of the portion indicated by slanting lines in FIG. 3) Sa that does not include the widthwise fine grooves 13a in the tread annular cross section of the inner side land portion 12a, to an annular cross sectional area (annular cross sectional area obtained by adding the widthwise fine grooves 13a to a portion indicated by slanting lines in FIG. 3) S that includes the widthwise fine grooves 13a is assumed to be indicated by an inner side land portion cross sectional area ratio Pa (= Sa/S).

Similarly, referring to FIG. 4, in the state in which the level of wear is 50% in the tread 7, the ratio of an annular cross sectional area (annular cross sectional area of the portion indicated by slanting lines in FIG. 4) Sb that does not include the widthwise fine grooves 13b in the tread annular cross section of the outer side land portion 12b, to an annular cross sectional area (annular cross sectional area obtained by adding the widthwise fine grooves 13b to a portion indicated by slanting lines in FIG. 4) S' that includes the widthwise fine grooves 13b is assumed to be indicated by an outer side land portion cross sectional area ratio Pb (= Sb/S').

In a case where the inner side land portion cross sectional area ratio Pa (= Sa/S) and the outer side land portion cross sectional area ratio Pb (= Sb/S') described above are compared with each other, since the total cross sectional area of the widthwise fine grooves 13b is smaller than the total cross sectional area of the widthwise fine grooves 13a, the outer side land portion cross sectional area ratio Pb is higher than the inner side land portion cross sectional area ratio Pa (Pa < Pb) .

Since, in the state in which the level of wear is 50% in the tread 7, the outer side land portion cross sectional area ratio Pb is higher than the inner side land portion cross sectional area ratio Pa, the outer side land portion 12b is higher in rigidity than the inner side land portion 12a.

In a pneumatic tire mounted on a steering wheel that is steered on a vehicle, the progress of wear is faster in the shoulder regions of the tire tread to which great friction force by steering of the tread is applied than that in the center region. Specifically, after the middle stage of wear, uneven wear normally becomes evident.

Since, in the state in which the level of wear is 50%, the present pneumatic tire 1 has the outer side land portions 12b in the shoulder regions that are higher in rigidity than the inner side land portions 12a in the center region, in a case where the pneumatic tire 1 is mounted on a steering wheel, the progress of wear of the outer side land portions 12b in the shoulder regions can be suppressed from the middle stage of wear in which uneven wear becomes evident, compared with the progress of wear of the inner side land portions 12a in the center region, and the commerciality and the quality of the tire can thus be maintained.

Since the widthwise fine grooves 13a and 13b formed in the land portions 12a and 12b have the widened groove portions 13ae and 13be having an increased groove width at the groove bottom thereof, the widened groove portions 13ae and 13be are maintained not only in the early stage of wear but also from the middle stage of wear, and the draining property is secured by the widened groove portions 13ae and 13be. Consequently, a desirable wet grip performance can be maintained together with edge components.

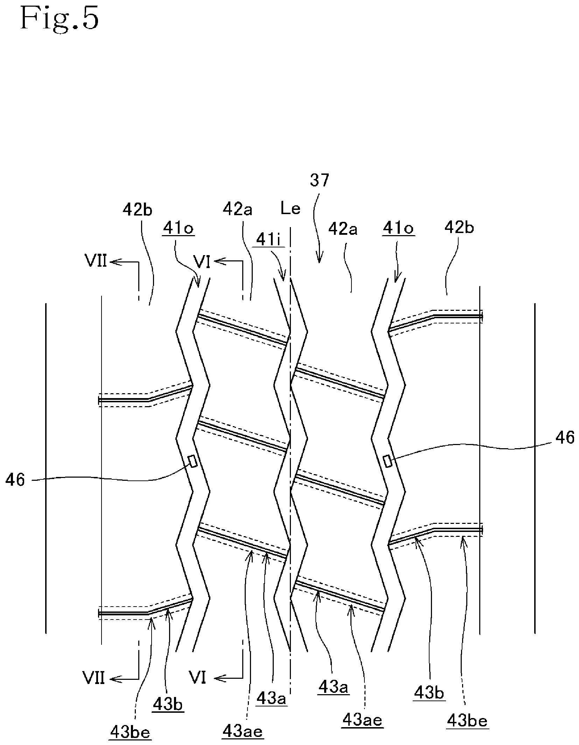

Next, a pneumatic tire 31 according to another embodiment is described on the basis of FIGS. 5 to 7.

In a tread 37 of the pneumatic tire 31, a middle circumferential groove 41i and outer side circumferential grooves 41o having the same shapes as those of the middle circumferential groove 11i and the outer side circumferential grooves 11o of the tread 7 are formed, and four land portions including inner side land portions 42a in the center region and outer side land portions 42b in the shoulder regions are formed by being partitioned by the three circumferential grooves 41o, 41i, and 41o (refer to FIG. 5).

In the outer side circumferential grooves 41o of the present tread 37, tread wear indicators 46 that are protrusions slightly projecting from the groove bottom by a predetermined amount are formed at several locations in the tire circumferential direction.

Referring to FIG. 5, in the land portions 42b, 42a, 42a, and 42b, a plurality of widthwise fine grooves 43b, 43a, 43a, and 43b having a small groove width are formed in the tire circumferential direction so as to individually extend in the tire widthwise direction.

The opposite ends of the inner side widthwise fine groove 43a in the inner side land portion 42a extend to and communicate with the middle circumferential groove 41i and the outer side circumferential groove 41o.

The outer side widthwise fine groove 43b in the outer side land portion 42b has one end communicating with the outer side circumferential groove 41o and the other end extending to an outer side face of the outer side land portion 42b in the shoulder region.

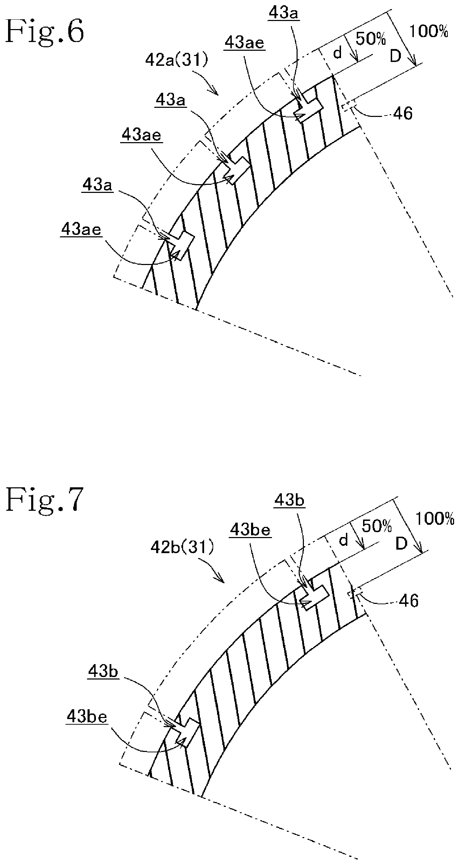

Referring to FIGS. 6 and 7, the widthwise fine grooves 43b, 43a, 43a, and 43b respectively have widened groove portions 43be, 43ae, 43ae, and 43be having an increased groove width at the groove bottom thereof.

The widened groove portions 43be, 43ae, 43ae, and 43be have a rectangular cross section.

As depicted in FIGS. 6 and 7, the inner side widthwise fine grooves 43a and the outer side widthwise fine grooves 43b have the same cross sectional shape as well as the widened groove portions 43ae and 43be.

However, in a tread annular cross section of the inner side land portion 42a depicted in FIG. 6, three widthwise fine grooves 43a are formed in a spaced relation with each other in the circumferential direction in a range of a center angle of 40 degrees.

In contrast, in a tread annular cross section of the outer side land portion 42b depicted in FIG. 7, two widthwise fine grooves 43b are formed in an equally spaced relation with each other in the circumferential direction in a range of a center angle of 40 degrees.

Accordingly, the number of the widthwise fine grooves 43b in the outer side land portion 42b is smaller than that of the widthwise fine grooves 43a in the inner side land portion 42a.

Therefore, the sectional area of the widthwise fine grooves 43b in the outer side land portions 42b is smaller than the sectional area of the widthwise fine grooves 43a in the inner side land portions 42a.

Referring to FIG. 6, in the state in which the level of wear is 50% in the tread 37, the ratio of an annular cross sectional area (annular cross sectional area of the portion indicated by slanting lines in FIG. 6) Sa that does not include the widthwise fine grooves 43a in the tread annular cross section of the inner side land portion 42a, to an annular cross sectional area (annular cross sectional area obtained by adding the widthwise fine grooves 13a to a portion indicated by slanting lines in FIG. 6) S that includes the widthwise fine grooves 43a is assumed to be indicated by an inner side land portion cross sectional area ratio Pa (= Sa/S).

Similarly, referring to FIG. 7, in the state in which the level of wear is 50% in the tread 7, the ratio of an annular cross sectional area (annular cross sectional area of the portion indicated by slanting lines in FIG. 7) Sb that does not include the widthwise fine grooves 43a in the tread annular cross section of the outer side land portion 42b, to an annular cross sectional area (annular cross sectional area obtained by adding the widthwise fine grooves 13b to a portion indicated by slanting lines in FIG. 7) S' that includes the widthwise fine grooves 43a is assumed to be indicated by an outer side land portion cross sectional area ratio Pb (= Sb/S').

In a case where the inner side land portion cross sectional area ratio Pa (= Sa/S) and the outer side land portion cross sectional area ratio Pb (= Sb/S') described above are compared with each other, since the total cross sectional area of the widthwise fine grooves 43b is smaller than the total cross sectional area of the widthwise fine grooves 43a, the outer side land portion cross sectional area ratio Pb is higher than the inner side land portion cross sectional area ratio Pa (Pa < Pb) .

Since, in the state in which the level of wear is 50% in the tread 37, the outer side land portion cross sectional area ratio Pb is higher than the inner side land portion cross sectional area ratio Pa, the outer side land portion 42b is higher in rigidity than the inner side land portion 42a.

Since, in the state in which the level of wear is 50%, the present pneumatic tire 31 has the outer side land portions 42b in the shoulder regions that are higher in rigidity than the inner side land portions 42a in the center region, in a case where the pneumatic tire 31 is mounted on a steering wheel, the progress of wear of the outer side land portions 42b in the shoulder regions can be suppressed from the middle stage of wear in which uneven wear becomes evident, compared with the progress of wear of the inner side land portions 42a in the center region, and the commerciality and the quality of the tire can thus be maintained.

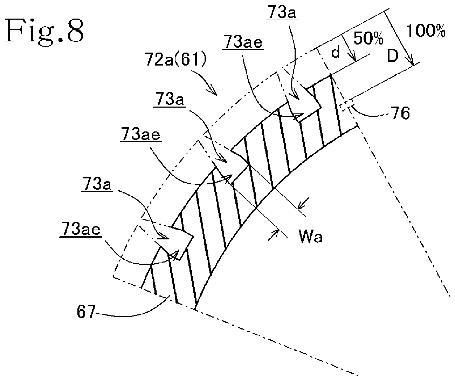

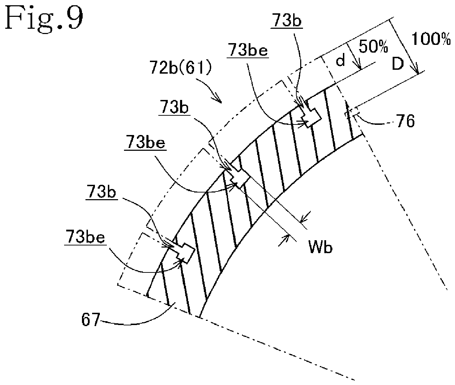

Next, a pneumatic tire 61 according to yet another embodiment is described with reference to FIGS. 8 and 9.

The pneumatic tire 61 according to the present embodiment has a structure substantially similar to that of the pneumatic tire 1 according to the embodiment described hereinabove except that the cross sectional shape of the outer side widthwise fine groove is different.

In outer side circumferential grooves of a tread 67, tread wear indicators 76 that are protrusions slightly projecting from the groove bottom by a predetermined amount are formed at several locations in the tire circumferential direction.

FIG. 8 is a partial cross sectional view depicting a tire circumferential cross section obtained when an inner side land portion 72a in the middle stage of wear of the tread 67 is taken along a plane perpendicular to the tire widthwise direction.

Inner side widthwise fine grooves 73a formed in the inner side land portion 72a in the middle in the tire widthwise direction each have such a shape that the groove width thereof gradually increases from a portion of the inner side widthwise fine groove 73a on a treading face of the tread to a widened groove portion 73be of the maximum width at the groove bottom.

FIG. 9 is a partial cross sectional view depicting a tire circumferential cross section obtained when an outer side land portion 72b on the outermost side in the middle stage of wear of the tread 67 is taken along a plane perpendicular to the tire widthwise direction.

The configuration of outer side widthwise fine groove 73b that is formed in the outer side land portion 72b and includes a widened groove portion 73be at the groove bottom is substantially the same as that of the inner side widthwise fine groove 13b described hereinabove.

Accordingly, in a case where the present pneumatic tire 61 is mounted on a steering wheel, the wear rate of the inner side land portion 72a in the middle in the tire widthwise direction gradually becomes higher from the middle stage of wear in which uneven wear becomes evident, and the difference in wear rate between the inner side land portion 72a and the outer side land portion 72b having a higher wear rate is thus reduced. By this, the uneven wear can further be suppressed and can be made less evident from the middle stage of wear.

As described above, the pneumatic tires according to the three embodiments of the present invention have been described. However, the mode of the present invention is not limited to the abovementioned embodiments, and the present invention includes what are carried out in various modes without departing from the scope of the present invention as defined by the appended claims.

It is to be noted that, in regard to the inner side land portion and the outer side land portion in the present invention, in a case where three or more land portions are provided on one side in the tire widthwise direction with respect to the tire equator line, two land portions adjacent to each other on one side in the tire widthwise direction are selected from among the three or more land portions, and one of the two land portions on the tire equator line side is set to the inner side land portion, while the other land portion on the outer side in the tire widthwise direction with respect to the inner side land portion is set to the outer side land portion.

Accordingly, the land portions lined up in order from the land portion on the tire equator line side to the land portion on the outermost side in the tire widthwise direction have such rigidity as to increase toward the outer side in the tire widthwise direction.

In the present embodiment, the widened groove portion provided at the groove bottom of the widthwise fine groove formed in the land portion may have a circular or oval cross section.

Further, in the present embodiment, the circumferential main groove is formed to extend in the tire circumferential direction in such a zigzag pattern as to swing in the tire widthwise direction. However, the circumferential main groove may be formed to extend linearly in the tire circumferential direction without swinging in the tire widthwise direction.

In the present embodiment, four land portions extending in the tire circumferential direction are defined by three circumferential main grooves. However, the configuration that can be taken is not limited to such configuration as described, and three or more circumferential main grooves may be provided, for example.

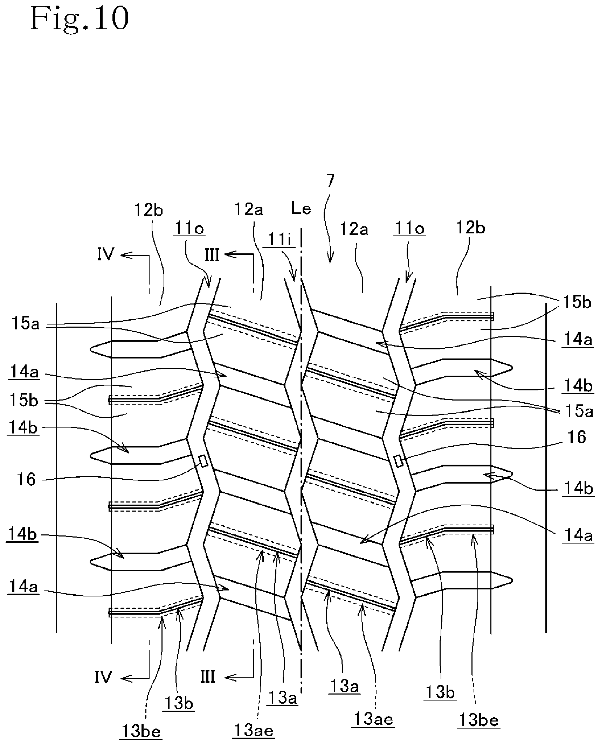

Further, in the present embodiment, a plurality of land portions partitioned by a plurality of circumferential grooves are rib-like land portions extending continuously in the tire circumferential direction. However, the land portions may be formed in such a form that, as depicted in FIG. 10, the widthwise fine grooves 13a and 13b extending in the tire widthwise direction are formed in block-shaped land portions 15a and 15b partitioned by, together with the circumferential grooves, widthwise grooves 14a and 14b extending in the tire widthwise direction.

In FIG. 10, reference signs of the embodiment depicted in FIG. 2 are applied.

It is to be noted that the pneumatic tire of the present invention can be applied not only as a tire for a truck or a bus but also as a tire for a passenger car.

### [Reference Signs List]

Le: Tire equator line
1: Pneumatic tire
2: Bead ring
3: Carcass ply
4: Inner liner portion
5: Belt layer
6: Belt ply
7: Tread
8: Side wall portion
9: Bead portion
11i: Middle circumferential groove
11o: Outer side circumferential groove
12a: Inner side land portion
12b: Outer side land portion
13a: Inner side widthwise fine groove
13ae: Widened groove portion
13b: Outer side widthwise fine groove
13be: Widened groove portion
14a, 14b: Widthwise groove
15a, 15b: Block-shaped land portion
16: Tread wear indicator
31: Pneumatic tire
37: Tread
41i: Middle circumferential groove
41o: Outer side circumferential groove
42a: Inner side land portion
42b: Outer side land portion
43a: Inner side widthwise fine groove
43ae: Widened groove portion
43b: Outer side widthwise fine groove
43be: Widened groove portion
46: Tread wear indicator
61: Pneumatic tire
67: Tread
72a: Inner side land portion
72b: Outer side land portion
73a: Inner side widthwise fine groove
73ae: Widened groove portion
73b: Outer side widthwise fine groove
73be: Widened groove portion
76: Tread wear indicator

## Claims

1. A pneumatic tire that has a plurality of land portions (12a, 12b; 42a, 42b; 72a, 72b) formed on a tread (7) of the tire by being partitioned by a plurality of circumferential grooves (11i, 11o) extending in a tire circumferential direction, the plurality of land portions (12a, 12b; 42a, 42b; 72a, 72b) extending in the tire circumferential direction, and that has a plurality of widthwise fine grooves (13a, 13b; 43a, 43b; 73a, 73b) formed in the land portions (12a, 12b; 42a, 42b; 72a, 72b) so as to extend in a tire widthwise direction, wherein
the widthwise fine grooves (13a, 13b; 43a, 43b; 73a, 73b) have widened groove portions (13ae, 13be; 43ae, 43be; 73ae, 73be) provided at a groove bottom thereof with an increased groove width, and
in a case where, among adjacent ones of the land portions (12a, 12b; 42a, 42b; 72a, 72b) on one side in the tire widthwise direction with respect to a tire equator line (Le) placed in a middle in the tire widthwise direction, one of the adjacent land portions on a side of the tire equator line (Le) is assumed to be an inner side land portion (12a; 42a; 72a) and another land portion on an outer side in the tire widthwise direction with respect to the inner side land portion (12a; 42a; 72a) is assumed to be an outer side land portion (12b; 42b; 72b),
the tire being **characterised in that**:
when, in a state in which the tire is worn to a depth of 50% of a depth from a treading face of a tread of an unused tire to an end face of a tread wear indicator (16), an inner side land portion cross sectional area ratio (Pa) and an outer side land portion cross sectional area ratio (Pb) are compared with each other,
the inner side land portion cross sectional area ratio (Pa) being a ratio of an annular cross sectional area that does not include the area of the widthwise fine grooves (13a; 43a; 73a) in a tread annular cross section obtained when the inner side land portion (12a; 42a; 72a) is cut along a plane perpendicular to the tire widthwise direction, to an annular cross sectional area that includes the area of the widthwise fine grooves (13a; 43a; 73a),
the outer side land portion cross sectional area ratio (Pb) being a ratio of an annular cross sectional area that does not include the area of the widthwise fine grooves (13b; 43b; 73b) in a tread annular cross section obtained when the outer side land portion (12b; 42b; 72b) is cut along the plane perpendicular to the tire widthwise direction, to an annular cross sectional area that includes the area of the widthwise fine grooves (13b; 43b; 73b),
the outer side land portion cross sectional area ratio (Pb) is higher than the inner side land portion cross sectional area ratio (Pa).

2. The pneumatic tire according to claim 1, wherein the widened groove portions (13be) of the widthwise fine grooves (13b) in the outer side land portion (12b) have a smaller groove width than a groove width of the widened groove portions (13ae) of the widthwise fine grooves (13a) in the inner side land portion (12a).

3. The pneumatic tire according to claim 1, wherein the number of the widthwise fine grooves (43b) in the outer side land portion (42b) is smaller than the number of the widthwise fine grooves (43a) in the inner side land portion (42a).

4. The pneumatic tire according to claim 1, wherein the widthwise fine grooves (73a) in the inner side land portion (72a) in the middle in the tire widthwise direction among the land portions are each shaped so as to have a groove width that gradually increases from the treading face of the tread of the unused tire to corresponding one of the widened groove portions (73ae) of a maximum width.

5. The pneumatic tire according to claim 1, wherein the pneumatic tire is mounted on a steering wheel of a vehicle.

## Patentansprüche

1. Luftreifen, der eine Vielzahl von Stegabschnitten (12a, 12b; 42a, 42b; 72a, 72b) aufweist, die auf einer Lauffläche (7) des Reifens gebildet sind, indem sie durch eine Vielzahl von Umfangsrillen (11i, 11o) unterteilt sind, die sich in eine Reifenumfangsrichtung erstrecken, wobei sich die Vielzahl von Stegabschnitten (12a, 12b; 42a, 42b; 72a, 72b) in die Reifenumfangsrichtung erstreckt, und der eine Vielzahl von feinen Rillen in Breitenrichtung (13a, 13b; 43a, 43b; 73a, 73b) aufweist, die in den Stegabschnitten (12a, 12b; 42a, 42b; 72a, 72b) gebildet sind, sodass sie sich in eine Reifenbreitenrichtung erstrecken, wobei
die feinen Rillen in Breitenrichtung (13a, 13b; 43a, 43b; 73a, 73b) verbreiterte Rillenabschnitte (13ae, 13be; 43ae, 43be; 73ae, 73be) aufweisen, die an einem Rillenboden davon mit einer erhöhten Rillenbreite bereitgestellt sind, und
in einem Fall, in dem, unter aneinandergrenzenden der Stegabschnitte (12a, 12b; 42a, 42b; 72a, 72b) auf einer Seite in der Reifenbreitenrichtung in Bezug auf eine Reifenäquatorlinie (Le), die in der Reifenbreitenrichtung in einer Mitte angeordnet ist, bei einem der aneinandergrenzenden Stegabschnitte auf einer Seite der Reifenäquatorlinie (Le) davon ausgegangen wird, dass er ein Innenseitenstegabschnitt (12a; 42a; 72a) ist und bei einem anderen Stegabschnitt auf einer Außenseite in der Reifenbreitenrichtung in Bezug auf den Innenseitenstegabschnitt (12a; 42a; 72a) davon ausgegangen wird, dass er ein Außenseitenstegabschnitt (12b; 42b; 72b) ist,
wobei der Reifen **dadurch gekennzeichnet ist, dass**:
wenn, in einem Zustand, in dem der Reifen bis zu einer Tiefe von 50 % einer Tiefe von einer Kontaktfläche einer Lauffläche eines noch nicht verwendeten Reifens zu einer Endfläche eines Laufflächenabnutzungsindikators (16) abgenutzt ist, ein Innenseitenstegabschnitt-Querschnittsflächenverhältnis (Pa) und ein Außenseitenstegabschnitt-Querschnittsflächenverhältnis (Pb) miteinander verglichen werden,
wobei das Innenseitenstegabschnitt-Querschnittsflächenverhältnis (Pa) ein Verhältnis einer ringförmigen Querschnittsfläche, die die Fläche der feinen Rillen in Breitenrichtung (13a; 43a; 73a) in einem ringförmigen Laufflächenquerschnitt, der erhalten wird, wenn der Innenseitenstegabschnitt (12a; 42a; 72a) entlang einer zu der Reifenbreitenrichtung senkrechten Ebene geschnitten wird, nicht einschließt, zu einer ringförmigen Querschnittsfläche, die die Fläche der feinen Rillen in Breitenrichtung (13a; 43a; 73a) einschließt,
wobei das Außenseitenstegabschnitt-Querschnittsflächenverhältnis (Pb) ein Verhältnis einer ringförmigen Querschnittsfläche, die die Fläche der feinen Rillen in Breitenrichtung (13b; 43b; 73b) in einem ringförmigen Laufflächenquerschnitt, der erhalten wird, wenn der Außenseitenstegabschnitt (12b; 42b; 72b) entlang einer zu der Reifenbreitenrichtung senkrechten Ebene geschnitten wird, nicht einschließt, zu einer ringförmigen Querschnittsfläche, die die Fläche der feinen Rillen in Breitenrichtung (13b; 43b; 73b) einschließt,
das Außenseitenstegabschnitt-Querschnittsflächenverhältnis (Pb) größer ist als das Innenseitenstegab schnitt-Querschnittsflächenverhältni s (Pa).

2. Luftreifen nach Anspruch 1, wobei die verbreiterten Rillenabschnitte (13be) der feinen Rillen in Breitenrichtung (13b) in dem Außenseitenstegabschnitt (12b) eine kleinere Rillenbreite aufweisen als eine Rillenbreite der verbreiterten Rillenabschnitte (13ae) der feinen Rillen in Breitenrichtung (13a) in dem Innenseitenstegabschnitt (12a).

3. Luftreifen nach Anspruch 1, wobei die Anzahl der feinen Rillen in Breitenrichtung (43b) in dem Außenseitenstegabschnitt (42b) kleiner ist als die Anzahl der feinen Rillen in Breitenrichtung (43a) in dem Innenseitenstegabschnitt (42a).

4. Luftreifen nach Anspruch 1, wobei die feinen Rillen in Breitenrichtung (73a) in dem Innenseitenstegabschnitt (72a) in der Mitte in der Reifenbreitenrichtung unter den Stegabschnitten jeweils so geformt sind, dass sie eine Rillenbreite aufweisen, die sich von der Kontaktfläche der Lauffläche des noch nicht verwendeten Reifens allmählich zu einer entsprechenden der verbreiterten Rillenabschnitte (73ae) einer maximalen Breite erhöht.

5. Luftreifen nach Anspruch 1, wobei der Luftreifen auf einem Antriebsrad eines Fahrzeugs angebracht ist.

## Revendications

1. Bandage pneumatique, qui comporte une pluralité de parties d'appui (12a, 12b ; 42a, 42b ; 72a, 72b) formées sur une bande de roulement (7) du pneumatique en étant divisées par une pluralité de rainures circonférentielles (11i, 11o) s'étendant dans une direction circonférentielle du pneumatique, la pluralité de parties d'appui (12a, 12b ; 42a, 42b ; 72a, 72b) s'étendant dans la direction circonférentielle du pneumatique, et qui comporte une pluralité de fines rainures dans le sens de la largeur (13a, 13b ; 43a, 43b ; 73a, 73b) formées dans les parties d'appui (12a, 12b ; 42a, 42b ; 72a, 72b) de sorte à s'étendre dans une direction de la largeur du pneumatique, dans lequel
les fines rainures dans le sens de la largeur (13a, 13b ; 43a, 43b ; 73a, 73b) comportent des parties de rainure élargies (13ae, 13be ; 43ae, 43be ; 73ae, 73be) fournies au niveau d'un fond de rainure de celles-ci, avec une largeur de rainure accrue, et
dans un cas où, parmi des parties adjacentes des parties d'appui (12a, 12b ; 42a, 42b ; 72a, 72b), sur un côté, dans la direction de la largeur du pneumatique, par rapport à une ligne équatoriale du pneumatique (Le) disposée au milieu dans la direction de la largeur du pneumatique, une des parties d'appui adjacentes sur un côté de la ligne équatoriale du pneumatique (Le) est supposée être une partie d'appui du côté interne (12a ; 42a ; 72a), et une autre partie d'appui, sur un côté externe dans la direction de la largeur du pneumatique par rapport à la partie d'appui du côté interne (12a ; 42a ; 72a) est supposée être une partie d'appui du côté externe (12b ; 42b ; 72b) ;
le pneumatique étant **caractérisé en ce que** :
lorsque, dans un état où le pneumatique est usé jusqu'à une profondeur de 50 % d'une profondeur d'une face de roulement d'une bande de roulement d'un pneumatique neuf vers une face d'extrémité d'un indicateur d'usure de bande de roulement (16), un rapport d'une aire de section transversale de la partie d'appui du côté interne (Pa) et un rapport d'une aire de section transversale de la partie d'appui du côté externe (Pb) sont comparés l'un avec l'autre,
le rapport de l'aire de section transversale de la partie d'appui du côté interne (Pa) étant un rapport entre une aire de section transversale annulaire qui n'inclue pas l'aire des fines rainures dans le sens de la largeur (13a ; 43a ; 73a) dans une section transversale annulaire de bande de roulement obtenue lorsque la partie d'appui du côté interne (12a ; 42a ; 72a) est coupée le long d'un plan perpendiculaire à la direction de la largeur du pneumatique, et une aire de section transversale annulaire qui inclut l'aire des fines rainures dans le sens de la largeur (13a ; 43a ; 73a),
le rapport de l'aire de section transversale de la partie d'appui du côté externe (Pb) étant un rapport entre une aire de section transversale annulaire qui n'inclut pas l'aire des fines rainures dans le sens de la largeur (13b ; 43b ; 73b) dans une section transversale annulaire de bande de roulement obtenue lorsque la partie d'appui du côté externe (12b ; 42b ; 72b) est coupée le long d'un plan perpendiculaire à la direction de la largeur du pneumatique, et une aire de section transversale annulaire qui inclut l'aire des fines rainures dans le sens de la largeur (13b ; 43b ; 73b),
le rapport de l'aire de section transversale de la partie d'appui du côté externe (Pb) est supérieur au rapport de l'aire de section transversale de la partie d'appui du côté interne (Pa).

2. Bandage pneumatique selon la revendication 1, dans lequel les parties de rainure élargies (13be) des fines rainures dans le sens de la largeur (13b) dans la partie d'appui du côté externe (12b) comportent une largeur de rainure inférieure à une largeur de rainure des parties de rainure élargies (13ae) des fines rainures dans le sens de la largeur (13a) dans la partie d'appui du côté interne (12a).

3. Bandage pneumatique selon la revendication 1, dans lequel le nombre des fines rainures dans le sens de la largeur (43b) dans la partie d'appui du côté externe (42b) est inférieur au nombre des fines rainures dans le sens de la largeur (43a) dans la partie d'appui du côté interne (42a).

4. Bandage pneumatique selon la revendication 1, dans lequel les fines rainures dans le sens de la largeur (73a) dans la partie d'appui du côté interne (72a), au milieu, dans la direction de la largeur du pneumatique, parmi les parties d'appui, sont chacune façonnées de sorte à comporter une largeur de rainure qui est accrue progressivement de la face de roulement de la bande de roulement du pneumatique neuf vers une partie correspondante des parties de rainure élargies (73ae) d'une largeur maximale.

5. Bandage pneumatique selon la revendication 1, dans lequel le bandage pneumatique est monté sur une roue directrice d'un véhicule.
